# EUROPEAN PATENT SPECIFICATION

(11) **EP 2 704 851 B1**
(45) Date of publication and mention of the grant of the patent: **03.04.2019**
(21) Application number: 12719653.3
(22) Date of filing: 30.04.2012
(51) Int. Cl.: B05B 11/00, A47F 1/04, A47F 7/28, A47K 5/12, B05B 9/04, B05B 9/043, A47F 1/12, A45D 34/00, A45D 40/00

(54) **IN-STORE SAMPLE DISPENSER**
PROBENSPENDER FÜR GESCHÄFTE
DISTRIBUTEUR D'ÉCHANTILLONS EN MAGASIN

(30) Priority: 03.05.2011 US 201113099568
(43) Date of publication of application: 12.03.2014
(73) Proprietor: Unilever PLC, London Greater London EC4Y 0DY (GB); Unilever N.V., 3013 AL Rotterdam (NL)
(72) Inventor: SNOW, John, Douglas, Trumbull, Connecticut 06611 (US); WILDER, Andrew, Zachery, Brewster, New York 10509 (US)
(74) Representative: Corsten, Michael Allan
(86) International application number: PCT/EP2012/057896
(87) International publication number: WO 2012/150209

(56) References cited:
- FR-A1- 2 712 471
- US-A1- 2004 217 197
- US-B1- 6 386 392

## Description

### BACKGROUND OF THE INVENTION

### Field of the Invention

The invention concerns a sample dispenser and method which allows a consumer to test products, especially flowable foods and personal care liquid products, prior to purchase in a retail establishment.

### The Related Art

Retail stores and especially the department and specialty cosmetic stores have counters displaying open packages. These allow consumers to test products. Some of these products are delivered in wide mouth jars. Others are packaged in less product exposed containers. Usually there is very little supervision in the sampling. Chances are high for microbial contamination.

Still another issue is the scarcity of shelf space. Retailers prefer to use shelf space for purchasable product rather than for bulky non-revenue generating sample dispensers.

US 2009/0294479 A1 (Sottosanti et al.) discloses progress in providing an on-shelf sample dispenser with a combined merchandising unit product display. There are some drawbacks with this technology. Prime is the difficult logistics of providing a refill bladder or pouch. These refills need to be custom manufactured. Low unit volumes and specialty sourcing mean extra costs.

Accordingly, there is a need for sample dispensers for a retail environment that can readily be refilled. Moreover, there also is a need for a more efficient, less wasteful and quicker mechanism in replacing one product variant for another within the same sample dispensing system.

US2004/217197A1 relates to an automated sprayer for spraying the walls of a shower enclosure with a liquid cleanser.

US6386392B1 relates to a reservoir for use with a dispensing appliance for spraying a liquid, wherein the dispensing appliance comprises a protecting plate and at least two needles for engaging the reservoir.

FR2712471A1 relates to a display for perfumes with reservoir and sample spray.

### SUMMARY OF THE INVENTION

A sample dispenser is provided according to claim 1.

Also provided is a method to allow a consumer to sample a product according to claim 5.

### DETAILED DESCRIPTION OF THE DRAWING

The various features and benefits of the present invention will become more apparent through consideration of the following drawing in which:
Figure 1 is a side view of a sample dispenser in accordance with one embodiment of the invention;
Figure 2 is a perspective view detailing an underside of a cradle assembly according to one embodiment of the invention;
Figure 3 is a front view of the cradle assembly showing a cross sectional view of the cradle dock;
Figure 4 is a cross sectional view of figure 1; and
Figure 5 is a perspective view of the sample dispenser according to figure 1 with a merchandising display unit placed between the dosing unit and the cradle assembly.

### DETAILED DESCRIPTION OF THE INVENTION

Now is disclosed a more efficient sample dispenser with an improved refill system. The original and subsequent refill containers may utilize the actual packaged retail product. No longer is there need to identify a bladder, pouch or other refill sampling reservoir that must be separately inventoried from the on-sale packages of product. Also it is very simple to change from one product variant to another. No longer is an extensive clean out of the lines necessary. All that is necessary is for a package of the new variant product to be inserted into an empty cradle assembly and the original variant package held in its cradle assembly to be removed.

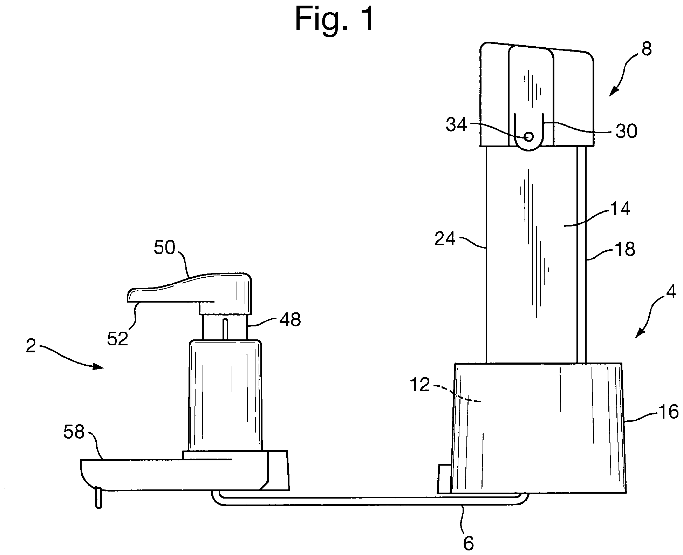

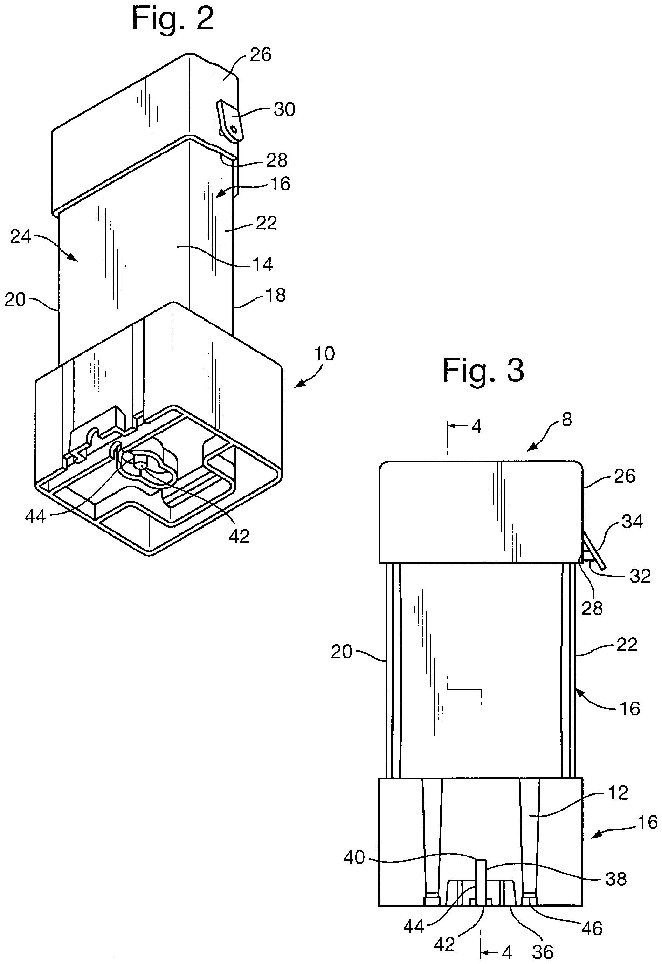

Figure 1 illustrates one embodiment of the sample dispenser. The dispenser features a dosing unit 2 and a cradle assembly 4. Flowable product can move via tubing 6 from the cradle assembly to the dosing unit. The cradle assembly includes a cap 8 and a dock 10, the latter having a receiving area 12. A product container 14 filled with flowable substance is fittable at a lower portion of the container into the receiving area. The cap is placable over an upper end of the product container. Figure 2 and 3 best illustrate shell 16 connecting the cap and dock. The shell is formed of a rear wall 18 and two side walls 20, 22 that surround the product container. An open face 24 of the shell allows the product container to be insertable within the cradle assembly.

The cap is formed with a side panel 26 and has a throughgoing piercing aperture 28. Molded with the cap is a pivoting arm 30. A plastic piercing tool 32, ie a tool for piercing plastic of hollow construction projects from the pivoting arm inwardly facing toward the cradle side panel. The piercing tool at the inwardly facing end has a sharp needle point capable of puncturing a plastic wall. A terminal end of the piercing tool opposite the inwardly facing end is attached to the pivoting arm and communicates with an aperture 34 traversing the pivoting arm.

The receiving area of the dock features a floor 36 from which projects an upwardly oriented hollow connector 38. At the end of the connector is a bayonet shaped plastic wall piercing mouth 40, ie a mouth for piercing a plastic wall. The term bayonet is intended to define a sharpened angular point of larger bore but similar in shape to those used in hypodermic needles.

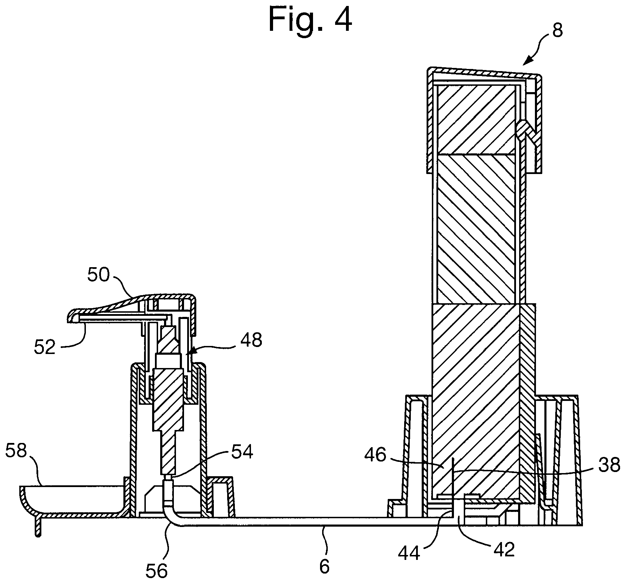

Figures 3 and 4 best illustrate the arrangement of the hollow connector. The outlet end 42 of the hollow connector is attached to the tubing 6 through an L-shaped joint 44. A pair of grippers 46 interact with complementary structures on shell 16 when the cradle assembly is moved downward into an activated position (i.e. puncture by the piercing bayonet mouth of the hollow connector).

Figures 1 and 4 best illustrate the dosing unit 2. The unit includes a mechanical pump 48 which drives flowable substance upward into the nozzle 50 having a dispensing exit 52. The mechanical pump at a lower end has an intake orifice 54 which is connected to a downstream end 56 of the tubing 6. A waste catchment 58 forms a base of the dosing unit and serves to receive any sample errantly not intercepted by a consumer's hand or other receiving substrate.

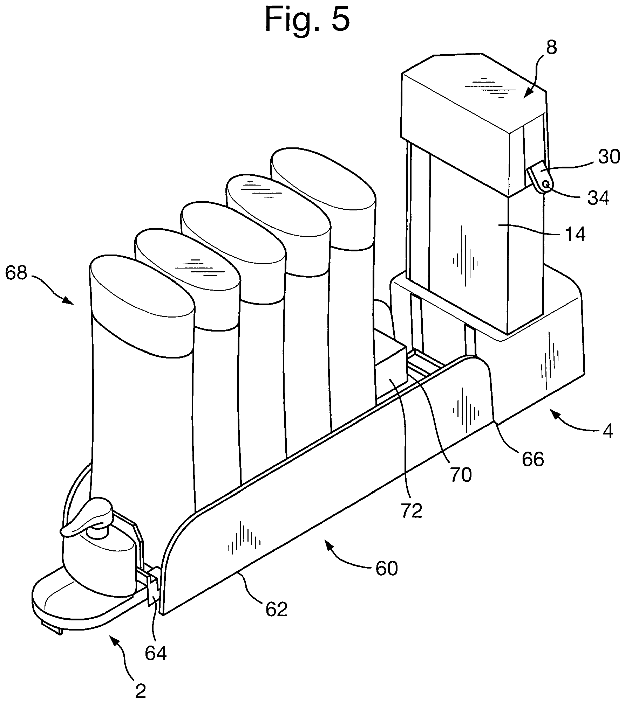

Figure 5 represents the in-store sample dispenser now combined with a merchandise product display unit 60. Unit 60 includes an elongate tray 62 having first and second ends 64, 66. Tray 62 features a pair of side walls, a floor and an open roof. A set of five product containers 68 identical to the product container 14 held within the cradle assembly stand upright in stacked relationship within a trough of the tray. A set of tracks 70 traverses a length of the trough floor. A support panel 72 is movably urged along the tracks by a coiled spring mechanism. The spring mechanism advances each of the product containers as an earlier stacked container is removed from the tray.

In the embodiment shown in figure 5, the dosing unit is attached to a front end 64 and the cradle assembly to a rear end 66 of the elongate tray 62. Tubing 6 is guided along a channel (not shown) fashioned on an outer surface of the floor. In this way, the tubing can transmit flowable substance from the cradle assembly to the dosing unit.

A variety of flowable substances are suitable for use with the sample dispenser. These flowable substances may be foods or personal care products. Typical foods might include ketchup and mayonnaise and salad dressing. Personal care products may be such cosmetics as lotions, creams, sunblock, sunless tanners, deodorants and antiperspirants. The foregoing list is not intended to be exclusive but merely intended to show possible uses.

The present invention also contemplates a method that allows a consumer to sample a product. The method first requires providing a sample dispenser as described hereinabove. There also needs to be provided a plastic product container to serve as a reservoir for the flowable substance to be dispensed. The method also requires activating the dosing unit to deliver a portion of the flowable substance to the consumer.

Activation is accomplished in the following manner. A plastic product container filled with the flowable substance to be sampled is positioned within the shell 16, and lodged within the receiving area 12 of the cradle dock 10. An upper end of the product container will be covered with the cradle cap 8. Activation occurs by hand pressure downward onto a roof of the cap which in turn forces a bottom of the product container to be pierced by the bayonet mouth of the hollow connector 38. This allows the flowable substance to exit the product container through the hollow connector. As flowable substance evacuates the product container, there is a need to equalize pressure. Equalization is achieved by placing pressure against the pivoting arm thereby forcing the piercing tool 32 to traverse through aperture 34 and puncture a wall of the product container.

## Claims

1. A sample dispenser comprising:
(i) a dosing unit (2) having a mechanical pump (48) and a nozzle (50) for dispensing sampling amounts of a flowable substance, the mechanical pump communicating with the nozzle;
(ii) a cradle assembly (4) comprising a cap (8) and a dock, the dock (10) having a receiving area and therein a floor (36) from which projects an upwardly oriented hollow connector (38) with a plastic wall piercing mouth (40), the cap being fittable over a product container (14); and
(iii) tubing (6) connecting the pump and the hollow connector allowing communication of the flowable substance between the product container and the pump; and
**characterized in that** the cap further comprises a piercing aperture (28) and a pivoting arm (30) having a plastic piercing tool (32) at an end thereof inwardly directed to traverse the piercing aperture (34) and capable of punching a vent hole into a wall of the product container.

2. A dispenser according to claim 1 further comprising a merchandise display unit (60), the merchandising display unit having a front end connected to the dosing unit and a rear end connected to the cradle assembly, and
wherein the merchandise display unit comprises an elongate tray (62) having a trough with multiple product containers (68) standing upright therein.

3. A dispenser according to claim 2 wherein the tubing is arrayed either under or alongside a length of the elongate tray.

4. A dispenser according to claim 2 wherein the product containers in the elongate tray are identical to the product container fitted into the cradle assembly.

5. A method to allow a consumer to sample a product, the method comprising:
(A) providing a sample dispenser according to any one of the preceding claims
(B) activating the dosing unit to deliver a portion of the flowable substance to the consumer, and
**characterised in that it further** comprises the step of selecting a product container for use in the cradle assembly as a supply reservoir for the flowable substance, the container being of identical shape to the multiple product containers stacked in the elongate tray.

## Patentansprüche

1. Probenspender, der Folgendes umfasst:
(i) eine Dosiereinheit (2), die eine mechanische Pumpe (48) und eine Düse (50) besitzt, um Probenmengen einer fließfähigen Substanz abzugeben, wobei die mechanische Pumpe mit der Düse kommuniziert;
(ii) eine Hängegestellanordnung (4), die eine Kappe (8) und ein Dock umfasst, wobei das Dock (10) einen Aufnahmebereich und darin einen Boden (36), von dem ein aufwärts orientierter Hohlverbinder (38) mit einer Kunststoffwanddurchstechmündung (40) vorsteht, besitzt, wobei die Kappe über einem Produktbehälter (14) angebracht werden kann; und
(iii) eine Verrohrung (6), die die Pumpe und den Hohlverbinder verbindet und eine Kommunikation der fließfähigen Substanz zwischen dem Produktbehälter und der Pumpe ermöglicht;
**dadurch gekennzeichnet, dass** die Kappe ferner eine Durchstechöffnung (28) und einen Schwenkarm (30), der an einem seiner Enden ein Kunststoffdurchstechmittel (32) besitzt, das einwärts gerichtet ist, um die Durchstechöffnung (34) zu durchqueren, und ein Entlüftungsöffnung in eine Wand des Produktbehälters stanzen kann, umfasst.

2. Probenspender nach Anspruch 1, der ferner eine Warenausstellungseinheit (60) umfasst, wobei die Warenausstellungseinheit eine Stirnseite, die mit der Dosiereinheit verbunden ist, und eine Rückseite, die mit der Hängegestellanordnung verbunden ist, besitzt und
die Warenausstellungseinheit ein langgestrecktes Tablett (62) umfasst, das einen Durchgang besitzt, in dem mehrere Produktbehälter (68) aufrecht stehen.

3. Probenspender nach Anspruch 2, wobei die Verrohrung entweder unter oder neben einer Länge des langgestreckten Tabletts angeordnet ist.

4. Probenspender nach Anspruch 2, wobei die Produktbehälter in der langgestreckten Schale mit dem Produktbehälter, der in der Hängegestellanordnung angebracht ist, identisch sind.

5. Verfahren, um einem Verbraucher zu ermöglichen, ein Produkt zu probieren, wobei das Verfahren Folgendes umfasst:
(A) Bereitstellen eines Probenspenders nach einem der vorhergehenden Ansprüche und
(B) Aktivieren der Dosiereinheit, um eine Portion der fließ fähigen Substanz an den Verbraucher abzugeben,
**dadurch gekennzeichnet, dass** es ferner den Schritt des Wählens eines Produktbehälters zur Verwendung in der Hängegestellanordnung als einen Vorratsbehälter für die fließfähige Substanz umfasst, wobei der Behälter die gleiche Form wie die mehreren Produktbehälter, die in dem langgestreckten Tablett gelagert sind, besitzt.

## Revendications

1. Distributeur d'échantillon comprenant :
(i) une unité de dosage (2) ayant une pompe mécanique (48) et un embout (50) pour distribuer des quantités d'échantillonnage d'une substance fluide, la pompe mécanique communiquant avec l'embout ;
(ii) un assemblage de berceau (4) comprenant un couvercle (8) et un socle, le socle (10) ayant une surface de réception et dans lequel un plancher (36) à partir duquel un connecteur creux orienté vers le haut (38) avec une embouchure de perçage de paroi en plastique (40) fait saillie, le couvercle étant ajustable sur un récipient de produit (14) ; et
(iii) un tubage (6) connectant la pompe et le connecteur creux permettant une communication de la substance fluide entre le récipient de produit et la pompe ; et
**caractérisé en ce que** le couvercle comprend de plus une ouverture de perçage (28) et un bras pivotant (30) ayant un outil de perçage de plastique (32) à une extrémité de celui-ci dirigé vers l'intérieur pour traverser l'ouverture de perçage (34) et capable de poinçonner un trou d'évent dans une paroi du récipient de produit.

2. Distributeur selon la revendication 1, comprenant de plus une unité d'affichage de marchandise (60), l'unité d'affichage de marchandise ayant une extrémité avant connectée à l'unité de dosage et une extrémité arrière connectée à l'assemblage de berceau, et
dans lequel l'unité d'affichage de marchandise comprend un plateau allongé (62) ayant une gouttière avec de multiples récipients de produits (68) tenant debout dans celle-ci.

3. Distributeur selon la revendication 2, dans lequel le tubage est déployé soit sous soit le long d'une longueur du plateau allongé.

4. Distributeur selon la revendication 2, dans lequel les récipients de produits dans le plateau allongé sont identiques au récipient de produit ajusté dans l'assemblage de berceau.

5. Procédé pour permettre à un consommateur d'échantillonner un produit, le procédé comprenant :
(A) la fourniture d'un distributeur d'échantillon selon l'une quelconque des revendications précédentes
(B) l'activation de l'unité de dosage pour délivrer une portion de la substance fluide au consommateur, et
**caractérisé en ce qu'**il comprend de plus l'étape de sélection d'un récipient de produit pour une utilisation dans l'assemblage de berceau comme un réservoir d'alimentation pour la substance fluide, le récipient étant de forme identique aux multiples récipients de produits empilés dans le plateau allongé.
